(19) Europäisches Patentamt
European Patent Office
Office européen des brevets

(11) Numéro de publication: **0 253 749 B1**

(12) **FASCICULE DE BREVET EUROPEEN**

(45) Date de publication de fascicule du brevet: **09.10.91**

(51) Int. Cl.5: **B01D 57/02**, B01D 61/42

(21) Numéro de dépôt: **87420197.3**

(22) Date de dépôt: **16.07.87**

# (54) Procédé de séparation en continu par électrophorèse et électro-osmose de matières solides pulvérulentes électriquement chargées.

(30) Priorité: **18.07.86 FR 8610649**

(43) Date de publication de la demande: **20.01.88 Bulletin 88/03**

(45) Mention de la délivrance du brevet: **09.10.91 Bulletin 91/41**

(84) Etats contractants désignés: **AT BE DE ES GB IT NL SE**

(56) Documents cités:
**US-A- 4 048 038**
**US-A- 4 107 026**

(73) Titulaire: **OMYA S.A.**
**35, Quai André Citroen**
**F-75725 Paris Cedex 15(FR)**

(72) Inventeur: **Barnier, Henri**
**Altair Clos Chantemerle Route de Cézanne**
**F-13100 Aix-En-Provence(FR)**
Inventeur: **Barroyer, Bernard**
**3, Quartier Parrocel**
**F-13750 Plan D'Orgon(FR)**
Inventeur: **Cabannes, Claude**
**Draiile des Troupeaux**
**F-13810 Eygalieres(FR)**

(74) Mandataire: **Derambure, Christian et al**
**BUGNION ASSOCIES 55, rue Boissonade**
**F-75014 Paris(FR)**

EP 0 253 749 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un procédé de séparation en continu par électro-phorèse et électro-osmose de matières solides pulvérulentes électriquement chargées. Elle s'applique aux matières solides qui, en suspension dans un milieu aqueux et lorsqu'elles sont soumises à l'action d'un champ électrique se comportent comme des ions électro-négatifs, le caractère électro-négatif leur étant soit naturel, soit conféré par tout moyen approprié.

De nombreux procédés développés dans l'industrie minérale, notamment pour le traitement des kaolins, nécessitent une concentration des suspensions contenant des particules très fines ou même colloïdales. De façon générale, les méthodes de déshydratation faisant appel aux opérations classiques de filtration, sédimentation, centrifugation, cyclonage, séchage par voie thermique sont, soit par trop inefficaces en ce qu'elles ne permettent pas d'obtenir un solide suffisamment essoré, soit, au plan économique, d'un coût prohibitif. On admet que pour des particules de diamètre ne dépassant pas 10 microns, l'électro-filtration constitue un moyen de concentration efficace mettant en jeu pour un même résultat final une énergie égale seulement au dixième de celle qui est requise par une opération de séchage thermique.

Le principe de fonctionnement de l'électro-filtration est connu. L'opération consiste à soumettre la suspension contenant les particules solides que l'on veut séparer du liquide support à l'action d'un champ électrique généré entre deux électrodes. Ceci suppose en premier lieu que la suspension à traiter est conductrice du courant électrique. Si les particules solides ont un caractère électro-négatif, elles migrent sous l'action du champ électrique vers l' anode sur laquelle elles auront tendance à se déposer. Le liquide libéré par le déplacement propre du solide se meut en direction inverse et migre donc avec les ions électro-positifs présents dans la suspension en direction de la cathode. Les déplacements dans des directions opposées des particules solides et du liquide provoquent une séparation des deux phases, le solide se concentrant par dépôt sur l'anode.

Bien entendu, l'efficacité de l'opération est conditionnée par un certain nombre de paramètres dont on ne citera que les plus importants :

- la dispersion des particules au sein de la masse de liquide qui les entoure, cette dispersion étant fonction de leur poids spécifique et de leur potentiel électrocinétique encore appelé potentiel Zéta,
- la mobilité des particules solides, fonction à la fois du potentiel Zéta, du champ électrique qui leur est appliqué et de la viscosité du liquide dans lequel elles se meuvent,
- la résistivité électrique propre du milieu qui, pour un champ électrique fixé, détermine l'intensité du courant circulant.

L'acquisition d'un caractère électro-négatif et l'importance de ce caractère qui conditionne notamment la dispersion des particules au sein de la phase liquide peuvent être liées à l'emploi d'additifs minéraux ou organiques hydrosolubles. Ces additifs introduits en très faible quantité, se fixent par adsorption sur les particules solides, leur confèrent un caractère électro-négatif plus ou moins marqué et favorisent ainsi leur dispersion au sein du liquide. Ils peuvent de plus modifier l'ionicité propre du liquide et donc agir sur la résistivité du milieu.

D'autres paramètres liés à la conception et à la réalisation des cellules d'électro-filtration conditionnent l'efficacité de fonctionnement de ces cellules. On peut citer parmi ceux-ci la forme des électrodes, leur positionnement, leur écartement et la nature des matériaux constituant ces électrodes.

Les problèmes qui se posent à l'homme de l'art dans toute opération d'électro-filtration sont en particulier ceux de l'obtention par dépôt sur l'anode de solides suffisamment essorés, qu'il importe de collecter, et ceux de l'élimination du liquide déplacé par la concentration du dépôt de matières solides.

En vue d'accroître l'efficacité de la collecte de ces solides, la forme de l'anode a évolué dans le temps. On connaît depuis de nombreuses années, grâce en particulier au brevet américain 1,133,967, l'utilisation d'anodes rotatives ayant la forme d'un tambour et permettant d'effectuer simultanément en continu le dépôt et l'élimination du gâteau de solides. Ce tambour, dont l'axe est horizontal, est à moitié immergé dans un bac contenant la suspension à concentrer. La collecte des solides est effectuée en continu par râclage à l'aide d'un dispositif approprié (couteau, fil, raclette) de la surface de l'anode lorsque celle-ci, du fait de sa rotation, émerge de la suspension.

De même, on connaît (brevets américains 3,972,799 et 4,107,026 et brevet français 2 552 096) l'emploi d'anodes en forme de disques permettant d'augmenter sensiblement la surface active pour un même volume d'appareillage. Ces anodes sont disposées verticalement sur un arbre horizontal et tournent à demi immergées dans un bac alimenté par la suspension à traiter. Entre chaque anode et à intervalle constant sont fixées des cloisons solidaires du bac, isolées électriquement de ce dernier et reliées au pole négatif d'un générateur de courant.

En raison des phénomènes d'oxydation qui ont lieu à l'anode par dégagement d'oxygène et qui

peuvent entraîner une dégradation de cette anode par corrosion, l'homme de l'art a été amené :

- soit à protéger l'anode par la mise en place à son voisinage immédiat d'une membrane semi-perméable délimitant un compartiment anodique de faible volume et sur laquelle se dépose le gâteau de solides, évitant ainsi la pollution des solides déposés par les produits de corrosion de l'anode (brevet américain 4,048,038 et certificat d'addition 2 423 254 au brevet français 2 354 802),
- soit à utiliser des anodes inattaquables constituées de matériaux nobles (par exemple tantale) ou de métaux revêtus par électro-déposition de ces matériaux nobles (titane platiné) ou d'oxydes métalliques insensibles à la corrosion.

Cependant, une difficulté recontrée par l'homme de l'art est celle de l'élimination en continu de l'eau libérée par la migration et l'électro-déposition des solides sur l'anode tout en assurant le maintien à une concentration constante de la suspension présente dans la cellule d'électro-séparation.

Les premières cellules ne comportaient pas de membrane semi-perméable permettant de délimiter un compartiment anodique et un compartiment cathodique.

Selon le brevet américain 1,132,967, les cathodes employées étaient constituées par des éléments métalliques en forme de barres ou de plats ménageant des espaces pour le passage de la phase liquide. D'autres inventeurs utilisaient comme électrode une toile métallique enroulée sur un tambour constituant selon la nature des phases solide et liquide la cathode ou l'anode (brevet américain 1,435,886). L'anode réalisée à l'aide d'une bande sans fin montée sur rouleaux venait au contact du gâteau de solides déposé sur le tambour dont elle épousait la courbure. L'obtention d'un dépôt de solides concentrés par élimination du liquide contenu dans le gâteau était favorisée soit par l'application d'une pression de contact entre la bande montée sur rouleaux et le tambour, soit par la mise sous vide du tambour. En vue d'augmenter l'efficacité de la déshydratation, on associait ainsi une extraction du liquide par électro-osmose et une filtration, soit sous l'effet de l'application d'une pression extérieure, soit sous l'effet d'une dépression.

Par la suite, la recherche d'une meilleure efficacité a amené l'homme de l'art à utiliser des membranes semi-perméables afin de constituer deux compartiments bien distincts, anodique et cathodique. Le rôle des membranes semi-perméables est de laisser passer le liquide tout en restant imperméables au passage des solides. La suspension à traiter étant introduite dans le compartiment anodique et les ions électro-négatifs migrant en direction de l'anode, la membrane joue un rôle de médium filtrant à l'égard de la cathode. Le liquide dont le volume correspond au volume des solides migrant vers l'anode se déplace sous l'action des forces de Drag en direction opposée vers la cathode, traverse le médium filtrant et passe ainsi dans le compartiment cathodique. Le passage de ce liquide à travers le médium est conditionné par un certain nombre de facteurs liés les uns à la constitution propre dudit médium (nature du matériau, porosité, perméabilité ...), les autres au milieu (viscosité du liquide jouant le rôle d'électrolyte et dont l'eau est le constituant principal).

Le passage du liquide à travers le médium en direction du compartiment cathodique peut être facilité comme indiqué précédemment par une mise sous vide partielle de ce compartiment (brevet américain 4,003,849) ce qui équivaut à augmenter la pression motrice de l'écoulement osmotique à travers le médium. La régulation de l'extraction liquide par régulation du niveau du catholyte a été revendiquée dans le brevet américain 4,107,026. On sait que le débit d'eau circulant à travers le médium est lié à la perte de charge de l'écoulement. L'objectif recherché étant que les particules solides migrent en direction de l'anode, il existe une valeur du champ électrique dite "valeur critique" au-delà de laquelle la force électrique exercée sur la particule équilibre la force de Drag. L'intensité du champ électrique appliqué doit donc être supérieure à cette "valeur critique", afin d'éviter l'accumulation progressive sur le médium filtrant cathodique des particules les plus fines entraînées par le déplacement du liquide. Cette accumulation, en s'opposant à l'écoulement à travers le médium, rendrait plus difficile le passage de la phase aqueuse.

L'entrée d'eau dans le compartiment cathodique par passage à travers le médium a pour effet de provoquer une dilution de l'électrolyte (appelé encore catholyte) présent dans ce compartiment. La nécessité de maintenir un certain niveau de concentration du catholyte afin d'assurer le passage du courant électrique de la cathode vers la suspension à traiter, a conduit les chercheurs à extraire l'électrolyte dilué en vue de le renouveler en le prélevant directement dans le compartiment cathodique.

Une régulation du débit du liquide extrait du compartiment cathodique a été revendiquée dans le brevet français 2 354 802 et son certificat d'addition 2 423 254. L'extraction de la phase aqueuse du compartiment cathodique est régulée par mesure continue du niveau liquide du catholyte en agissant soit indépendamment, soit de façon simultanée sur les deux paramètres suivants :

- dépression régnant au-dessus du niveau liquide du compartiment cathodique et densité du courant électrique circulant à travers la cellule d'électro-séparation.

En effet, le passage du liquide à travers le médium filtrant cathodique est facilité par le maintien permanent d'une dépression au-dessus du niveau du catholyte. Le vide partiel au-dessus de la cathode est

régulé à l'aide d'une pompe à vide asservie à la mesure de la dépression. De plus, la formation d'un léger dépôt de fines particules solides sur le médium filtrant ou l'accumulation de ces particules à son voisinage immédiat peuvent être encouragées ou découragées en modifiant l'intensité du champ électrique et donc la densité de courant. Une augmentation de la densité de courant provoque un accroissement correspondant de la vitesse de migration des particules solides vers l'anode. Une diminution de la densité de courant aura pour conséquence la formation d'un dépôt de particules sur le médium filtrant s'opposant au passage du liquide. Ainsi, en jouant simultanément sur les deux paramètres (dépression régnant au-dessus du niveau du catholyte et densité de courant), l'homme de l'art est parvenu à obtenir un fonctionnement équilibré de la cellule pour un débit fixé d'extraction de filtrat hors du compartiment cathodique.

Cependant, l'expérience acquise par la Demanderesse a montré que, dans le temps, après un certain nombre d'heures de marche, une régulation ne prenant en compte que les deux seuls paramètres précités s'avère très insuffisante pour maintenir un fonctionnement efficace de la cellule d'électro-séparation car on observe simultanément une diminution progressive du dépôt de solides sur l'anode, une diminution du débit de filtrat traversant le médium cathodique et une augmentation du pH du catholyte tendant vers de fortes valeurs alcalines.

L'homme de l'art a eu recours, pour augmenter l'efficacité de la séparation des solides, à l'introduction d'additifs acides dans le compartiment cathodique. On connaît d'après certains brevets américains déjà cités (US 3,980,547, US 4,003,811 et US 4,048,038) l'emploi à cette fin d'acides minéraux tels que les acides chlorhydrique, sulfurique ou phosphorique. Selon ces brevets, on s'efforce de maintenir le pH du catholyte entre 2 et 7, la concentration de la solution acide introduite allant de 0,1% à 10% (brevet US 3,980,547) ou de 0,1 à 1% (brevet US 4,003,811 et US 4,048,038) en poids.

Au fur et à mesure que la phase aqueuse provenant du compartiment anodique pénètre par électro-osmose à travers la membrane dans le compartiment cathodique, la dilution du catholyte qui s'ensuit entraîne une altération des caractéristiques électriques (résistivité notamment) de ce dernier. Pour que la transmission du courant électrique soit maintenue à un niveau suffisant, il est nécessaire que les propriétés du catholyte et, par suite, sa composition ne varient pas hors de certaines limites. Afin d'extraire la phase aqueuse comme indiqué précédemment et afin de maintenir un passage permanent du courant à des valeurs d'intensités connues, l'homme de l'art a été amené (US 3,980,547, US 4,003,811 et US 4,048,038) à assurer une circulation ouverte continue du catholyte à travers le compartiment cathodique. Du catholyte frais est introduit de façon continue directement dans le compartiment cathodique et le catholyte usé est extrait de ce même compartiment. Une solution acide est, comme précédemment indiqué, ajoutée au catholyte frais de façon à maintenir le pH du catholyte contenu dans le compartiment cathodique dans une fourchette de valeurs allant de 2 à 7.

Selon d'autres réalisations de l'art antérieur, certains dispositifs d'électro-séparation comportent en outre une seconde membrane semi-perméable disposée autour de l'anode et définissant un espace clos appelé compartiment anodique. Le rôle de cette membrane (constituant également un médium filtrant) sur laquelle se déposent par électro-phorèse les particules solides est d'éviter une contamination de ce dépôt par les produits de corrosion de l'anode (brevet US 4,048,038).

L'électrolyte contenu dans le compartiment anodique appelé anolyte contient des sels minéraux dont certains se dissocient sous l'action des réactions électro-chimiques localisées au voisinage de l'anode. L'altération des propriétés électriques qui en résulte nécessite, tout comme dans le cas des catholytes, un renouvellement de ces anolytes en vue de maintenir leur composition au voisinage de valeurs constantes.

On connaît, grâce au certificat d'addition FR 2 423 254, l'existence de dispositifs permettant d'assurer ce renouvellement. L'installation comporte un ensemble d'appareils disposés selon une boucle fermée sur le compartiment anodique. L'anolyte extrait passe tout d'abord dans une chambre de dégazage où s'effectue la séparation entre la phase liquide et les gaz générés par les réactions électro- chimiques de la décomposition de l'électrolyte au contact de l'anode. La phase liquide s'écoule par gravité dans une capacité tampon avant d'être renvoyée à l'aide d'une pompe dans le compartiment anodique. L'anolyte usé est extrait directement de cette capacité tampon. De même, l'anolyte frais contenu dans un réservoir de stockage intermédiaire est introduit en un point du circuit en amont de la capacité tampon. Cependant, l'extraction de l'anolyte usé étant effectuée directement par un seuil de débordement fixé sur la capacité tampon traversée par le courant d'anolyte recyclé vers le compartiment anodique, le dispositif tel qu'il est décrit ne peut fonctionner efficacement que si l'introduction d'anolyte neuf dans le circuit et le soutirage d'anolyte usé sont effectués indépendamment l'un de l'autre et de manière discontinue . Il en résulte que la composition de l'électrolyte en circulation fermée sur l'anode ne peut pas être maintenue constante telle qu'elle est décrite dans le certificat précité et qu'elle varie entre des limites de valeurs qui n'ont pas été précisées.

De plus, comme l'anolyte est une solution de NaCl, il se forme par réaction électrolytique du chlore qui

se dégage à l'anode. Comme indiqué dans le certificat d'addition FR 2 423 254, ce chlore doit être éliminé ou éventuellement réintroduit dans le compartiment cathodique. Mais la manipulation du chlore gazeux et sa réintroduction dans ledit compartiment présentent de très sérieux inconvénients. Dans le cas où l'introduction du chlore se fait dans l'atmosphère d'hydrogène qui se dégage dans le compartiment cathodique, il peut en résulter un mélange explosif. Dans le cas de l'injection directe du chlore dans le catholyte, cette injection conduit à la formation d'acide hypochloreux de faible constante de dissociation qui n'entrave pas l'évolution progressive du catholyte vers des pH fortement alcalins. De plus, les hypochlorites générés dans le catholyte sont des composés agressifs provoquant la destruction de la cathode par corrosion et la pollution du catholyte dont la fraction extraite ne peut être rejetée dans le milieu naturel.

Ainsi, quelles que soient les solutions décrites dans l'art antérieur pour le traitement du catholyte, à savoir l'injection de chlore ou l'introduction de solutions d'acides minéraux (HCl, $H_2SO_4$, $H_3PO_4$), ledit catholyte contient alors des éléments étrangers tels que soufre, chlore, phosphore initialement absents de la suspension à traiter. La fraction de catholyte soutiré du compartiment cathodique constitue un effluent qui nécessite avant tout rejet un traitement approprié pour qu'il puisse satisfaire aux réglementations anti-pollution.

D'autre part, il est scientifiquement connu que le volume de la phase aqueuse éliminée correspond au volume de la phase aqueuse déplacée par électro-osmose à travers le gâteau de particules solides déposées sur l'anode. Et, de ce fait, un fonctionnement continu, sans à-coups, de l'électro-séparation nécessite à la fois une parfaite régularité de passage de cette phase aqueuse à travers le médium filtrant et une excellente régularité de son extraction.

Or, la Demanderesse a mise en évidence lors de ses recherches l'importance du rôle joué par les ions hydroxyles OH- générés au voisinage de la cathode par la réaction d'électrolyse. Ces ions, qui migrent en direction de l'anode, se heurtent au cours de leur déplacement à la barrière que constitue le médium filtrant cathodique et contrarient le passage de la phase aqueuse en sens inverse à travers ledit médium.

L'accumulation dans le compartiment cathodique des ions hydroxyles agit ainsi défavorablement sur le fonctionnement de la cellule en constituant une entrave au passage de la phase aqueuse en direction de la cathode et par suite en perturbant la concentration par électro-osmose des solides déposés sur l'anode. Cette accumulation se traduit par une modification du pH du catholyte qui évolue si l'on n'y prend remède vers des valeurs fortement alcalines. Elle a pour conséquence d'entraîner après un certain nombre d'heures de marche un fonctionnement très perturbé de la cellule avec risque de blocage, quelles que soient les valeurs de réglage adoptées sur les autres paramètres conditionnant l'électro-séparation (champ électrique, densité du courant, résistivité du milieu, dépression au-dessus du compartiment cathodique, etc ...).

La présente invention concerne un procédé continu de séparation par électro-phorèse et électro-osmose de particules minérales chargées électro-négativement, en suspension dans un milieu aqueux, procédé dans lequel le traitement du catholyte est effectué en continu par un agent qui, tout en modifiant le rapport des espèces ioniques normalement présentes, assure une électro-séparation efficace des solides par formation continue et régulière d'un dépôt de particules sur l'anode, augmente l'efficacité du passage osmotique de la phase aqueuse à travers le milieu filtrant cathodique, permet de maintenir le pH du catholyte dans une fourchette de valeurs proches de la neutralité, n'introduit dans le catholyte aucun élément étranger modifiant la composition de ce catholyte et qui ne soit déjà présent dans la suspension à traiter, confère ainsi à la phase aqueuse extraite du compartiment cathodique en vue de l'élimination de l'eau en excès un caractère non polluant.

Selon l'invention, le procédé de séparation en continu par électro-phorèse et électro-osmose de fines particules minérales en suspension dans un milieu aqueux comprenant :

- l'introduction (en continu) de la suspension contenant la matière solide ayant un caractère électro-négatif dans une cellule d'électro-séparation munie d'une anode et d'une cathode entre lesquelles règne un champ électrique, ladite cathode étant équipée d'un médium filtrant perméable à la seule phase liquide définissant un compartiment cathodique contenant un catholyte, tandis que l'espace entre le médium filtrant et l'anode constitue la zone de traitement de la suspension à partir de laquelle l'excès de suspension est évacué par un moyen approprié,
- Le déplacement des particules solides sous l'effet d'un champ électrique, leur dépôt sous la forme d'un gâteau sur la surface anodique et le déchargement du gâteau hors de la zone de traitement de la suspension,
- le déplacement en sens inverse vers le compartiment cathodique de la phase liquide, sa filtration à travers le médium filtrant sous l'action d'une dépression et son évacuation dudit compartiment,

se caractérise en ce que, dans le but de réaliser simultanément et en continu un dépôt régulier de la phase solide sur l'anode et une extraction régulière de la phase liquide selon un rendement en eau au moins égal à 1, ledit rendement étant défini par le rapport entre la quantité $Q_1$ d'eau traversant le medium filtrant

cathodique et la quantité théorique QT d'eau déplacée par électro-osmose déterminées dans une unité de temps,

a) on prélève dans le compartiment cathodique une quantité $Q_3$ du catholyte par unité de temps, $Q_3$ étant supérieure à 2,5 QT,

b) on sépare la quantité $Q_3$ en deux fractions $Q_1$ et $Q_2$, $Q_1$ étant supérieure à QT et $Q_2$ étant supérieure à 1,5 QT,

c) on traite en continu la fraction $Q_2$ dans un dispositif de traitement hors de la cellule d'électro-séparation au moyen de $CO_2$ gaz.

d) on réinjecte en continu la fraction traitée $Q_2$ dans le compartiment cathodique pour modifier dans le catholyte le rapport des espèces ioniques présentes et rendre le catholyte propre à un rejet naturel.

La Demanderesse a, en effet, lors de nombreuses expériences, mis en valeur l'importance dudit rendement d'extraction en eau défini comme étant le rapport entre, d'une part, la quantité $Q_1$ d'eau traversant le milieu filtrant et éliminée définitivement et, d'autre part, la quantité d'eau théorique $Q_T$ déplacée par électro-osmose lors de la formation du dépôt de particules solides sur l'anode, rapportée à une unité de temps.

L'expérience montre qu'une condition absolument nécessaire pour un fonctionnement continu et régulier de la cellule d'électro-séparation est que ce rendement soit au moins égal à 1, souhaitablement supérieur à 1 et préférentiellement compris dans une fourchette de valeurs entre 1,01 et 1,50.

Ainsi, connaissant la teneur en matières sèches de la suspension à traiter et se fixant la teneur en matières sèches du gâteau à récolter sur l'anode, il est possible de déterminer la quantité $Q_T$ par unité de temps de liquide déplacé par électro-osmose dans le gâteau et donc de fixer la valeur de la quantité $Q_1$ de liquide par unité de temps à éliminer définitivement.

Puis la fraction $Q_1$ étant définie, on prélève dans le compartiment cathodique une quantité $Q_3$ par unité de temps très supérieure à $Q_T$. Cette unité $Q_3$ est ensuite fractionnée en deux quantités $Q_1$ et $Q_2$, la quantité $Q_1$ étant définitivement éliminée tandis que la quantité $Q_2$ est destinée à être traitée.

La fraction $Q_2$ destinée à être réintroduite dans le compartiment cathodique après traitement est réglée de telle sorte que le rapport $Q_2/Q_T$ est au moins égal à 1,5, souhaitablement au moins à 2,5 et préférentiellement compris entre 4 et 8 afin de favoriser la diffusion et le mélange de $Q_2$ au sein du catholyte présent dans le compartiment cathodique.

De préférence et Simultanément au prélèvement de la fraction $Q_3$, on mesure son pH et on compare cette valeur mesurée à une valeur de consigne. La comparaison entre les deux valeurs du pH permet de régler l'introduction de l'agent de traitement dans la fraction $Q_2$ de façon à obtenir dans le compartiment cathodique un pH proche ou égal au pH souhaité pour la fraction $Q_1$.

D'une manière générale, le pH de la fraction $Q_1$ à éliminer est fixé par l'utilisateur et permet de définir la valeur du pH de consigne. D'une manière préférentielle et pour satisfaire aux normes de rejet anti-pollution, le pH de ladite fraction $Q_1$ est choisi dans l'intervalle allant de 6,5 à 8.

Pour favoriser le passage de la fraction $Q_1$ à travers le médium filtrant, on crée d'une manière connue une dépression dans le compartiment cathodique. Cette dépression est généralement fixée à une valeur d'au moins $6,5.10^3$ Pascal (correspondant à 50 millimètres d'une colonne de mercure) et de préférence à des valeurs comprises entre $13.10^3$ Pascal et $47.10^3$ Pascal (correspondant à 100 à 350 millimètres de mercure).

Pour la bonne mise en oeuvre du procédé selon l'invention, les caractéristiques électriques de fonctionnement de la cellule d'électro-séparation sont les suivantes :

- l'intensité du champ électrique entre les deux électrodes est choisi dans l'intervalle de 1 à 25 $volts.cm^{-1}$ et préférentiellement dans l'intervalle de 5 à 15 $volts.cm^{-1}$,
- la densité de courant électrique est réglée dans l'intervalle de 1 à 20 $milli\text{-}ampères.cm^{-2}$ et préférentiellement entre 5 et 16 $milli\text{-}ampères.cm^{-2}$.

Selon l'invention, la suspension à traiter contenant de fines particules minérales de caractère électro-négatif, acquis naturellement ou artificiellement, dispose généralement d'une résistivité électrique comprise dans l'intervalle de 250 à 2 500 Ω.cm et préférentiellement entre 500 et 1 800 Ω.cm pour permettre le passage d'un courant d'intensité suffisante tout en limitant la consommation d'énergie électrique.

L'invention sera mieux comprise grâce à la description qui en est faite à partir d'un schéma (Figure 1) illustrant le procédé sans en limiter la portée.

Selon la figure 1, le dispositif mis en oeuvre est constitué d'une cellule d'électro-séparation comportant une capacité (1) munie d'une tuyauterie d'alimentation (2), elle-même reliée à un réservoir de stockage (3) contenant la suspension à traiter et d'un déversoir (4) relié à un bac de réception (5), en sorte que la cellule fonctionne avec un niveau constant de suspension et que l'excès d'alimentation est repris automatiquement dans le bac de réception (5). A l'intérieur de la capacité (1) sont positionnées une ou plusieurs séries

d'électrodes cathodiques et anodiques placées alternativement à distances réglées les unes par rapport aux autres et dont les surfaces planes sont parallèles les unes aux autres. Les anodes (6) reliées au pole positif d'une source extérieure de courant (7) peuvent :

- soit revêtir une forme rectangulaire, et il est alors possible de les déplacer dans un plan vertical dans un mouvement de bas en haut parallèlement à elles-mêmes afin de les sortir du bac d'électrolyte où elles sont immergées pour collecter le gâteau de solides déposé au cours de l'électrolyse,
- soit et de façon préférentielle revêtir la forme de disques circulaires animés d'un mouvement de rotation autour de leur axe horizontal et, dans ce cas, l'enlèvement du gâteau de solides est effectué en continu sur la partie du disque émergeant de la suspension par tout moyen (couteau, fil, raclette, etc...) déjà connu de l'homme de l'art.

Ces électrodes sont réalisées en métal noble tel que titane revêtu par électro-déposition d'une mince couche de platine ou par tout autre métal ou oxyde métallique résistant à la corrosion par les gaz générés à l'anode ou par les ions H+ associés au dégagement gazeux lors de la réaction électro-chimique.

Les cathodes (8) sont constituées par des éléments fixes et, selon une des formes de réalisation de la présente invention, peuvent se présenter sous la forme de secteurs hémi-circulaires en tôle d'acier inoxydable entièrement immergés dans la suspension et reliés au pole négatif du générateur de courant (7). Chaque cathode est équipée d'un médium filtrant (9) délimitant un volume clos (10) appelé compartiment cathodique dans lequel est contenu le catholyte.

Le compartiment cathodique est :

- relié d'une part à l'aide d'une conduite (11) débouchant à sa partie supérieure à une pompe à vide (12) permettant de réguler la dépression au-dessus du niveau du catholyte autour d'une valeur de consigne en fonction de la mesure propre (21) de cette dépression dans le compartiment cathodique,
- relié d'autre part à l'aide des tuyauteries (13) et (14) débouchant dans le compartiment en-dessous du niveau du catholyte à un dispositif (15) assurant l'injection continue et régulée de l'agent de traitement (gaz carbonique $CO_2$) dans la boucle fermée constituée par l'ensemble de ces deux tuyauteries, du dispositif d'injection (15) et du compartiment cathodique (10).

Une circulation du catholyte est assurée de façon continue à l'aide d'une pompe (16) dans la boucle ainsi définie. L'injection de l'agent de traitement est effectuée par tout moyen connu de l'homme de l'art permettant d'obtenir un contact efficace entre l'agent et le liquide. Le dispositif doit être adapté en fonction de l'agent utilisé et du débit $Q_2$ de catholyte en circulation.

Pour des installations de petite capacité, le dispositif d'injection du $CO_2$ peut être un disque en verre fritté. Pour des débits liquide et gaz plus importants, il peut être recommandé de recourir à des dispositifs connus de l'homme de l'art en génie chimique tels que colonnes à garnissage ou colonnes à dispersion. Le débit de l'agent de traitement est régulé en fonction d'une mesure (20) du pH du catholyte effectuée en continu sur le catholyte extrait du compartiment cathodique. La mesure de ce pH comparée a une valeur de consigne agit sur une vanne automatique (19) permettant de modifier le débit de l'agent introduit dans la boucle de façon à maintenir en permanence dans le compartiment cathodique un pH à des valeurs proches de la valeur du pH choisie par l'utilisateur.

Une quantité $Q_3$ de catholyte par unité de temps est extraite en continu du compartiment (10) au moyen de la tuyauterie (13). Ce volume $Q_3$ est fixé à une valeur très supérieure à $Q_T$. D'autre part, le volume $Q_1$ est prélevé sur le débit total $Q_3$ de catholyte sortant du compartiment (10) et évacué hors du circuit au moyen de la vanne (17) et de la tuyauterie (18). Dans le cas où l'agent de traitement est du $CO_2$ et où la fraction éliminée $Q_1$ constitue un effluent dont le pH contrôlé en continu et la teneur en constituants chimiques sont conformes aux normes de rejet autorisées par les réglementations officielles anti-pollution, la différence de débit $Q_3$ - $Q_1$, à savoir $Q_2$, est seule traitée dans le dispositif (15) d'introduction de l'agent et renvoyée dans la partie inférieure du compartiment cathodique (10) à l'aide de la pompe (16) et de la tuyauterie de retour (14). Dans le cas où l'agent de traitement est du $CO_2$, l'utilisation d'un dispositif approprié (15) pour son injection permet d'obtenir une dispersion homogène du gaz dans la fraction liquide $Q_2$. La réintroduction en circulation continue de ladite fraction dans la partie inférieure du compartiment cathodique ainsi que l'extraction de la fraction $Q_3$ en tête de ce compartiment, assurent une parfaite diffusion du catholyte traité au sein du catholyte contenu sur toute la hauteur du compartiment cathodique. Le débit de circulation $Q_2$ a une valeur telle qu'il permet d'assurer une absorption de gaz $CO_2$ en quantité suffisante pour neutraliser les ions hydroxyles générés dans le compartiment cathodique et maintenir dans ce compartiment un pH par exemple au plus égal à 8. Compte tenu de la faible alcalinité du catholyte extrait du compartiment cathodique et par suite de la très faible solubilité du $CO_2$ dans le catholyte, le rapport des débits massiques entre liquide circulant et gaz $CO_2$ doit être très important pour assurer l'absorption requise du gaz $CO_2$.

Le procédé selon l'invention tel que décrit peut s'appliquer au traitement de toutes suspensions

contenant de fines particules de matières solides électro-négatives en vue de la séparation desdites particules de la phase liquide où elles sont maintenues en suspension. De telles suspensions peuvent contenir des matériaux aussi divers que carbonate de calcium, kaolins, silicates, oxydes de titane, alumine, phosphates de calcium, gypses, etc...

La concentration en solides du gâteau obtenu par électro-séparation peut atteindre, par exemple, des valeurs aussi élevées que 75% pour des concentrations de la suspension soumise au traitement comprises dans l'intervalle de 20 à 50% en poids.

Afin d'illustrer de façon plus précise les possibilités offertes par l'invention, on donne ci-après deux exemples concernant, l'un l'électro-séparation d'une suspension de carbonate de calcium, l'autre l'électro-séparation d'une suspension de kaolins.

Exemple I

On a utilisé une suspension de carbonate de calcium ($CaCO_3$) de concentration en matière solide égale à 49,6% dans laquelle on a introduit un polymère organique (polyacrylate de sodium) à des concentrations de l'ordre de 0,3 à 0,4% en poids exprimé en sec sur sec par rapport au carbonate de calcium. Ce polymère, que s'adsorbe sur les particules de carbonate de calcium, a la propriété de charger très négativement les particules solides. La résistivité de la phase aqueuse est voisine de 600 Ω.cm.

Le champ électrique appliqué entre les électrodes est de 11,7 volts.$cm^{-1}$, ce qui, compte tenu d'une distance inter-électrodes de 6 centimètres, correspond à un champ global de 70 volts. La densité de courant est voisine de 16 milli-ampères.$cm^{-2}$. La dépression appliquée au-dessus du niveau liquide dans l'enceinte cathodique est de $26.10^3$ Pascal (soit environ 200 mm de mercure).

Pour un débit d'alimentation en suspension de la cellule d'électro-séparation égal à 765 kg.$h^{-1}$ et une masse recueillie de 506 kg.$h^{-1}$ de gâteau dont la concentration en matières solides $CaCO_3$ est de 75%, le débit $Q_1$ de liquide extrait de la cellule et rejeté du compartiment cathodique est de 263 l.$h^{-1}$. Le débit théorique $Q_T$ d'eau déplacée par électro-osmose lors du dépôt de matières solides sur l'anode est d'environ 259 l.$h^{-1}$. Le rendement d'extraction en eau est donc voisin de 1,015. Le débit total $Q_3$ extrait du compartiment cathodique est de 1 763 l.$h^{-1}$. Le débit de catholyte $Q_2$ recyclé dans le compartiment cathodique est de 1 500 l.$h^{-1}$ correspondant à un rapport $Q_2/Q_T$ égal à 5,79. Le pH du catholyte $Q_3$ extrait est de 7,9. L'injection de $CO_2$ est réglée pour que, compte tenu d'un débit liquide en recirculation $Q_2$ de 1 500 l.$h^{-1}$, le pH de cette fraction $Q_2$ soit abaissé à 7,3. Le débit de gaz $CO_2$ est dans ces conditions de 0,4 kg.$h^{-1}$, ce qui correspond à une consommation de $CO_2$ très légérement supérieure à 1 gramme (soit 0,51 litre dans les conditions normales de pression et température) par kilogramme de $CaCO_3$.

L'effluent $Q_1$ extrait de la cellule a, dans les conditions opératoires décrites,la composition chimique suivante :

| | | | |
|---|---|---|---|
| $Na^+$ | 1,2 g.$l^{-1}$ | $HCO_3^-$ | 3,61 g.$l^{-1}$ |
| $Ca^{++}$ | 34,5 mg.$l^{-1}$ | DCO | 80 mg.$l^{-1}$ |
| $Mg^{++}$ | 0,7 mg.$l^{-1}$ | | |

Le pH de $Q_1$ est de 7,1. En raison de l'utilisation comme médium filtrant délimitant le compartiment cathodique, d'un diaphragme à faible rayon de pores en chlorure de polyvinyle, la teneur en matières solides présentes dans l'effluent est inférieure à 50 mg.$l^{-1}$.

Composition chimique, pH et teneur en matières solides sont tels que l'effluent liquide possède un caractère non polluant et qu'il peut être rejeté tel quel sans traitement complémentaire destiné à le rendre conforme aux normes de rejet anti-pollution.

Exemple II

Cet exemple a trait à la séparation de particules de kaolin présentes dans une suspension aqueuse de concentration en matières solides égale à 24,6%, dans laquelle on introduit un agent dispersif constitué par un copolymère d'acrylate de sodium et d'acrylamide à concentration de 0,6% exprimé en poids de sec sur

sec par rapport au kaolin.

L'appareillage utilisé était le même que dans l'exemple I, avec toutefois une distance inter-électrodes réduite à 5 centimètres au lieu de 6 centimètres. La tension aux bornes du générateur de courant était voisine de 56 volts, correspondant à un champ électrique de l'ordre de 11,2 volts.cm$^{-1}$. La densité de courant était maintenue à 8 milli-ampères.cm$^{-2}$. Par ailleurs, la dépression au-dessus du niveau du catholyte dans le compartiment cathodique était de 13.10$^{3}$ Pascal (soit environ 100 mm de mercure). Dans les conditions opératoires ainsi définies et pour un débit d'alimentation de la cellule en suspension de l'ordre de 489 kg.h$^{-1}$, la quantité de kaolins humides déposés sur l'anode était égale à 261 kg.h$^{-1}$, la concentration de ces kaolins en matières solides étant de 46,9% . Le débit $Q_1$ de liquide extrait du compartiment cathodique et rejeté définitivement était de 300 l.h$^{-1}$ pour un débit d'eau théorique $Q_T$ déplacé par électro-osmose d'environ 228 l.h$^{-1}$. Le rendement d'extraction en eau était donc voisin de 1,315. La quantité de $CO_2$ injecté dans la fraction $Q_2$ de catholyte en recirculation sur le compartiment cathodique était ajustée en sorte que le pH dans le compartiment cathodique variait dans une fourchette allant de 6,7 à 7,3. La fraction aqueuse $Q_3$ extraite du compartiment cathodique et dont la partie éliminée $Q_1$ constitue un effluent avait un pH très voisin de la neutralité. Par ailleurs, la teneur en éléments calcium et sodium de cet effluent était la suivante :

**$Na^{+}$ 700 mg.l$^{-1}$ $Ca^{2+}$ 21 mg.l$^{-1}$**
**La DCO était comprise entre 20 et 40 mg.l$^{-1}$**

Comme dans le cas de l'exemple I, la quantité de matières solides en suspension dans l'effluent était inférieure à 50 mg.l$^{-1}$.

Exemple III - Exemple comparatif (avec et sans agent de traitement)

Le rôle du $CO_2$ est montré dans l'exemple suivant où une même suspension de kaolin (English China Clay) a été traitée pendant la même durée d'expérience dans une cellule de laboratoire, successivement en la présence puis en l'absence d'une injection de gaz $CO_2$.

Les conditions de fonctionnement de la cellule étaient les suivantes :
champ électrique 11,5 volts.cm$^{-1}$
distance inter-électrodes 5 centimètres
densité de courant 8 milli-ampères.cm$^{-2}$
dépression au-dessus du niveau du catholyte dans le compartiment cathodique : 13.10$^{3}$ Pascal (soit environ 100 mm de Hg).

La suspension de kaolin traitée avait une concentration initiale en matières solides de 25,9%. On introduisait dans cette suspension un agent dispersif constitué par un copolymère d'acrylate de sodium et d'acrylamide à concentration de 0,6% en poids exprimé en sec sur sec par rapport au kaolin.

Les deux essais ont été effectués, l'un en l'absence de $CO_2$, l'autre selon l'invention avec une injection de $CO_2$ réglée de manière à maintenir dans le compartiment cathodique un pH voisin de 8; ces deux essais ont eu chacun une durée de 12 heures.

Dans le tableau I ont été regroupées pour chaque expérimentation en la présence et en l'absence de gaz $CO_2$ et pour les première, troisième, sixième et douzième heure de fonctionnement de la cellule les valeurs :

- des quantités de matières solides exprimées en sec séparées sur l'anode,
- des débits d'eau extraite du compartiment cathodique exprimés en litres par heure,
- des rendements en eau ($Q_1/Q_T$).

TABLEAU I

| | Sans injection de $CO_2$ | | | Avec injection de $CO_2$ | | |
|---|---|---|---|---|---|---|
| | Quantité de Kaolin sec en $kg.h^{-1}$ | Eau extraite en $l.h^{-1}$ | Rendement en eau $Q_I/Q_T$ | Quantité de Kaolin sec en $kg.h^{-1}$ | Eau extraite en $l.h^{-1}$ | Rendement en eau $Q_I/Q_T$ |
| Au terme de la première heure de fonctionnement | 1,22 | 1,985 | 0,96 | 1,208 | 3,12 | 1,33 |
| Entre la deuxième et la troisième heure de fonctionnement | 1,099 | 1,970 | 0,94 | 1,236 | 3,02 | 1,32 |
| Entre la cinquième et la sixième heure de fonctionnement | 1,081 | 1,970 | 0,91 | 1,207 | 2,91 | 1,34 |
| Entre la onzième et la douzième heure de fonctionnement | 1,062 | 1,980 | 0,87 | 1,234 | 3,05 | 1,32 |

A partir de ce tableau, il est intéressant d'observer que, en l'absence d'injection de $CO_2$, le rendement en eau de la cellule ainsi que la quantité de matière minérale déposée sur l'anode sont décroissants avec le temps, la perte de productivité étant de l'ordre de 13% en douze heures, soit un peu plus d'un point par heure, alors qu'en présence d'une injection de $CO_2$, le rendement en eau et la quantité de matière minérale déposée sur l'anode restent constants avec le temps.

## Revendications

**1.** Procédé de séparation en continu par électro-phorèse et électro-osmose de fines particules minérales en suspension dans un milieu aqueux comprenant :

- l'introduction en continu de la suspension de la matière solide ayant un caractère électro-négatif dans une cellule d'électro-séparation munie d'une anode et d'une cathode entre lesquelles règne un champ électrique, ladite cathode étant équipée d'un milieu filtrant perméable à la seule phase liquide définissant un compartiment cathodique contenant un catholyte, tandis que l'espace entre le milieu filtrant et l'anode constitue la zone de traitement de la suspension à partir de laquelle l'excès de suspension est évacué par un moyen approprié,
- le déplacement des particules solides sous l'effet d'un champ électrique, leur dépôt sous la forme d'un gâteau sur la surface anodique et le déchargement du gâteau hors de la zone de traitement de la suspension,
- le déplacement en sens inverse vers le compartiment cathodique de la phase liquide, sa filtration à travers le milieu filtrant sous l'action d'une dépression et son évacuation dudit compartiment,
- caractérisé en ce que dans le but de réaliser simultanément et en continu un dépôt régulier de la phase solide sur l'anode et une extraction régulière de la phase liquide selon un rendement en eau au moins égale à 1, ledit rendement étant défini par le rapport entre la quantité $Q_1$ d'eau traversant le milieu filtrant cathodique et la quantité théorique $Q_1$ d'eau déplacée par électro-osmose dans l'unité de temps,

a) On prélève dans le compartiment cathodique une quantité $Q_3$ du catholyte par unité de temps, $Q_3$ étant supérieure à 2,5 $Q_T$ ,

b) on sépare la quanitité $Q_3$ en deux fractions $Q_1$ et $Q_2$, $Q_1$ étant supérieur à $Q_T$ et $Q_2$ étant supérieur à 1,5$Q_T$ et on élimine $Q_1$,

c) on traite en continu la fraction $Q_2$ dans un dispositif de traitement hors de la cellule d'électro-séparation au moyen de $CO_2$ gaz.

d) on réinjecte en continu la fraction traitée $Q_2$ dans le compartiment cathodique pour modifier dans le catholyte le rapport des espèces ioniques présentes et rendre le catholyte propre à un rejet naturel.

**2.** Procédé selon la revendication 1, caractérisé en ce que l'on mesure en continu le pH de la fraction $Q_3$ prélevée et en ce que l'introduction de $CO_2$ gaz est asservie à la mesure du pH et à un pH de consigne.

**3.** Procédé selon la revendication 2, caractérisé en ce que la valeur du pH de consigne est comprise entre 6,5 et 8,0.

**4.** Procédé selon l'une quelconque des revendications 1 à 3, caractérisé en ce que l'on pratique dans le compartiment cathodique une mise sous un vide partiel d'au moins $6{,}5.10^3$ Pascal.

**5.** Procédé selon la revendication 4, caractérisé en ce que le vide partiel est préférentiellement compris entre $13.\ 10^3$ et $47.10^3$Pascal.

**6.** Procédé selon l'une quelconque des revendications 1à 5, caractérisé en ce que l'on régle la résistivité de la suspension introduite entre 250 et 2500 Ω.cm et préférentiellement entre 500 et 1800 Ω.cm par introduction d'un agent cationique.

**7.** Procédé selon l'une quelconque des revendications 1 à 6, caractérisé en ce que le champ électrique entre les deux électrodes a une valeur comprise entre 1 et 25 volts.$cm^{-1}$ et préférentiellement entre 5 et 15 volts.$cm^{-1}$.

**8.** Procédé selon l'une quelconque des revendications 1 à 7, caractérisé en ce que la densité de courant est comprise entre 1 et 20 milli-ampères.$cm^{-2}$ et préférentiellement entre 5 et 16 milli-ampères.$cm^{-2}$.

**9.** Procédé selon l'une quelconque des revendications 1 à 8, caractérisé en ce que le rapport $Q_3/Q_T$ est supérieur à 5 et égal ou inférieur à 9,5.

## Claims

1. Process for continuous separation by electrophoresis and electroosmosis of fine inorganic particles in suspension in an aqueous medium, comprising:
   - continuous introduction of the suspension of the solid substance of an electronegative nature into an electroseparation cell equipped with an anode and a cathode between which an electrical field prevails, the said cathode being equipped with a filter medium permeable only to the liquid phase, defining a cathode compartment containing a catholyte, while the space between the filter medium and the anode forms the suspension treatment zone from which the excess of suspension is removed by a suitable means,
   - displacement of the solid particles under the effect of an electrical field, their deposition in the form of a cake on the anode surface and discharging of the cake out of the suspension treatment zone,
   - displacement of the liquid phase in the reverse direction towards the cathode compartment, its filtration through the filter medium under the action of a pressure reduction and its removal from the said compartment,
   - characterised in that, with the objective of simultaneously and continuously producing a uniform deposit of the solid phase on the anode and a uniform extraction of the liquid phase according to a yield of water equal to at least 1, with that yield being defined by the ratio between the quantity $Q_1$ of water passing through the cathode filter medium and the theoretical quantity $Q_1$ of water displaced by electroosmosis in unit time,

   a) a quantity $Q_3$ of the catholyte is taken from the cathode compartment by unit time, $Q_3$ being greater than 2.5 $Q_T$,

   b) the quantity $Q_3$ is divided into two fractions $Q_1$ and $Q_2$, $Q_1$ being greater than $Q_T$ and $Q_2$ being greater than 1.5 $Q_T$, and $Q_1$ is removed.

   c) fraction $Q_2$ is treated continuously in a treatment device out of the electroseparation cell by means of $CO_2$ gas,

   d) the treated fraction $Q_2$ is continuously reinjected into the cathode compartment to modify the ratio of ionic species present in the catholyte and to make the catholyte suitable for a natural discharge.

2. Process according to Claim 1, characterised in that the pH of the fraction $Q_3$ which is taken is measured continuously and in that the introduction of $CO_2$ gas is servo-controlled by the pH measurement and by a set-point pH.

3. Process according to Claim 2, characterised in that the value of the set-point pH is between 6.5 and 8.0.

4. Process according to any one of Claims 1 to 3, characterised in that a partial vacuum of at least $6.5x10^3$ pascals is used in the cathode compartment.

5. Process according to Claim 4, characterised in that the partial vacuum is preferably between $13x10^3$ and $47x10^3$ pascals.

6. Process according to any one of Claims 1 to 5, characterised in that the resistivity of the suspension introduced is controlled between 250 and 2500 Ω cm and preferably between 500 and 1800 Ω cm by introducing a cationic agent.

7. Process according to any one of Claims 1 to 6, characterised in that the electrical field between the two electrodes has a value of between 1 and 25 volts $cm^{-1}$ and preferably between 5 and 15 volts $cm^{-1}$.

8. Process according to any one of Claims 1 to 7, characterised in that the current density is between 1 and 20 milliamperes $cm^{-2}$ and preferably between 5 and 16 milliamperes $cm^{-2}$.

9. Process according to any one of Claims 1 to 8, characterised in that the ratio $Q_3/Q_T$ is higher than 5 and equal to or lower than 9.5.

**Patentansprüche**

1. Verfahren zum kontinuierlichen Abtrennen von feinen mineralischen Teilchen, die in einem wäßrigen

Medium suspendiert sind, durch Elektrophorese und Elektroosmose, folgende Schritte aufweisend:

- kontinuierliche Zufuhr der Suspension des festen Materials mit elektrisch negativem Vorzeichen in eine elektrische Abscheidezelle mit einer Anode und einer Kathode, zwischen denen ein elektrisches Feld aufgespannt ist, wobei die Kathode ein filtrierendes Medium aufweist, welches nur für die flüssige Phase durchlässig ist und eine Kathodenkammer bestimmt, die einen Katolyten enthält, wogegen der Freiraum zwischen dem filtrierenden Medium und der Anode die Bearbeitungszone bildet, von der die überschüssige Suspension durch ein geeignetes Mittel abgeführt wird,
- Verlagerung der festen Teilchen durch ein elektrisches Feld, deren Ablagerung in der Form eines Kuchens auf der Anodenfläche und Abladen des Kuchens außerhalb der Bearbeitungszone für die Suspension, und
- Verlagerung der flüssigen Phase in entgegengesetzter Richtung zur Kathodenkammer, ihre Filterung durch das filtrierende Medium mittels Unterdruck und Abscheidung der flüssigen Phase aus der Kammer, **dadurch gekennzeichnet,** daß zur gleichzeitigen und kontinuierlichen Herstellung einer gleichmäßigen Ablagerung der festen Phase auf der Anode und einer gleichmäßigen Extraktion der flüssigen Phase mit einer Wasserausbeute von zumindest 1, wobei die Ausbeute durch das Verhältnis zwischen der das kathodische Filtermedium durchquerenden Menge $Q_1$ und der theoretischen Menge QT des durch Elektroosmose in der Zeiteinheit beförderten Wassers bestimmt wird, folgende Schritte vorgesehen sind:

a) Entnehmen einer Menge $Q_3$ des Katolyten pro Zeiteinheit aus der Kathodenkammer, wobei $Q_3$ größer als 2,5 QT ist,

b) Trennen der Menge $Q_3$ in zwei Teilmengen $Q_1$ und $Q_2$, wobei $Q_1$ größer als QT ist und $Q_2$ größer als 1,5 QT ist und $Q_1$ eliminiert wird,

c) kontinuierliches Behandeln der Teilmenge $Q_2$ mit $CO_2$-Gas in einer Behandlungsvorrichtung außerhalb der elektrischen Abscheidezelle,

d) kontinuierliches Wiedereinspritzen der behandelten Teilmenge $Q_2$ in die Kathodenkammer, um im Katolyten das Verhältnis der vorhandenen Ionenarten zu verändern und den Katolyten für eine natürliche Aussonderung geeignet zu machen.

2. Verfahren nach Anspruch 1, **dadurch gekennzeichnet,** daß man kontinuierlich den pH-Wert der entnommenen Teilmenge $Q_3$ mißt und daß die Zufuhr von $CO_2$-Gas von der Messung des pH-Wertes und einem festgesetzten Wert abhängt.

3. Verfahren nach Anspruch 2, **dadurch gekennzeichnet,** daß der festgesetzte pH-Wert zwischen 6,5 und 8,0 liegt.

4. Verfahren nach einem der Ansprüche 1 bis 3, **dadurch gekennzeichnet,** daß die Kathodenkammer unter einem Teilvakuum von zumindest $6{,}5.10^3$ gehalten wird.

5. Verfahren nach Anspruch 4, **dadurch gekennzeichnet,** daß das Teilvakuum vorzugsweise zwischen $13.10^3$ und $47.10^3$ Pascal gehalten wird.

6. Verfahren nach einem der Ansprüche 1 bis 5, **dadurch gekennzeichnet,** daß der spezifische Widerstand der eingebrachten Suspension durch Zufuhr eines kationischen Mittels zwischen 250 und 2500 Ω.cm und vorzugsweise zwischen 500 und 1800 Ω.cm geregelt wird.

7. Verfahren nach einem der Ansprüche 1 bis 6, **dadurch gekennzeichnet,** daß das elektrische Feld zwischen den beiden Elektroden einen Wert zwischen 1 und 25 $Volt.cm^1$ und vorzugsweise zwischen 5 und 15 $Volt.cm^1$ aufweist.

8. Verfahren nach einem der Ansprüche 1 bis 7, **dadurch gekennzeichnet,** daß die Stromdichte zwischen 1 und 20 $Milliampère.cm^{-2}$ und vorzugsweise zwischen 5 und 16 $Milliampère.cm^{-2}$ liegt.

9. Verfahren nach einem der Ansprüche 1 bis 8, **dadurch gekennzeichnet,** daß das Verhältnis $Q_3/QT$ über 5 und gleich bei oder unter 9,5 liegt.

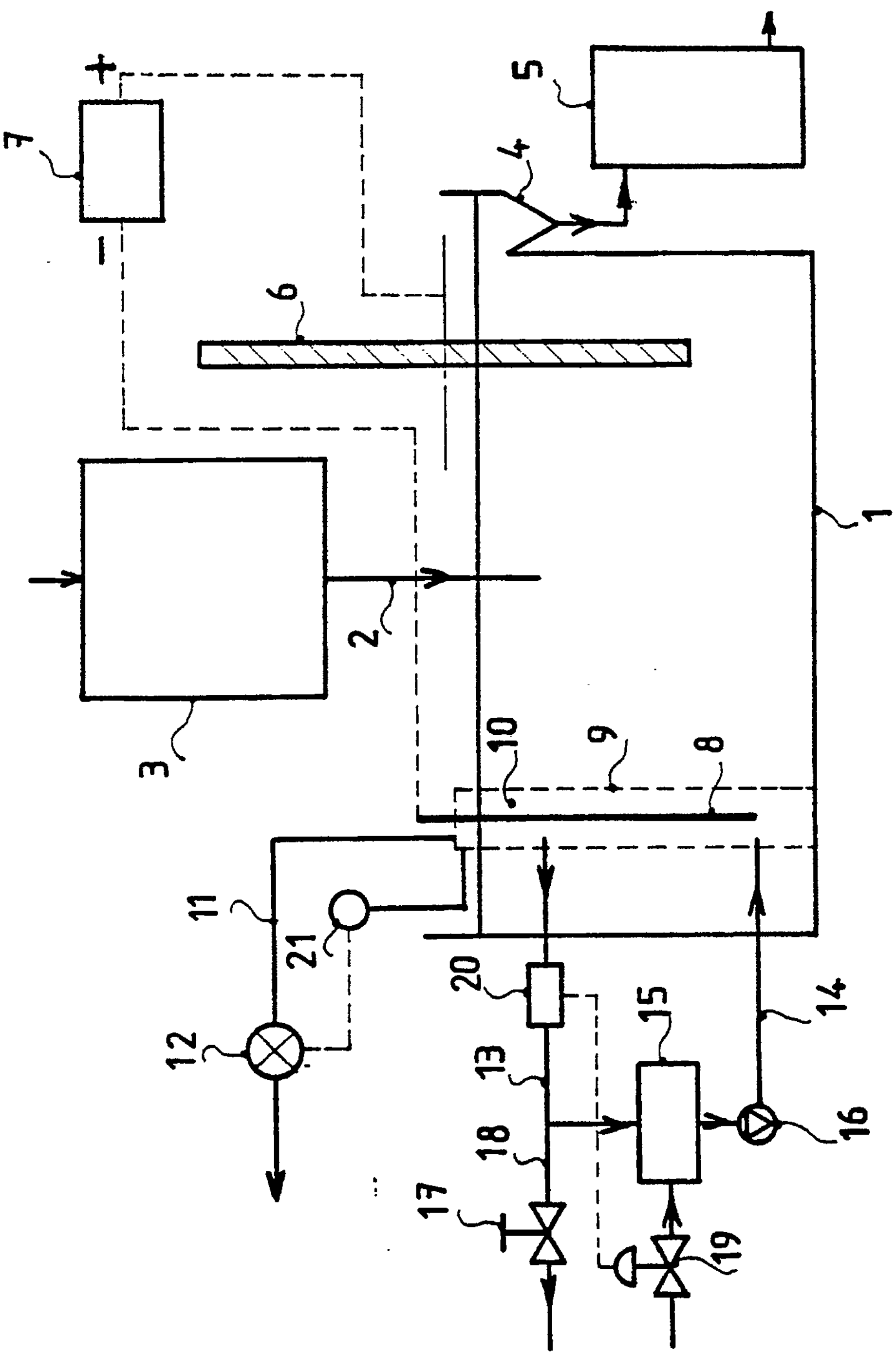


FIG.1